Europäisches Patentamt

European Patent Office

Office européen des brevets

(11) Publication number: **0 462 364 A2**

# (12) EUROPEAN PATENT APPLICATION

(21) Application number: 91104682.9

(51) Int. Cl.⁵: **A23B 7/005**, A23B 7/148

(22) Date of filing: 25.03.91

(30) Priority: 23.03.90 JP 72148/90

(43) Date of publication of application:
27.12.91 Bulletin 91/52

(84) Designated Contracting States:
DE FR GB

(71) Applicant: **MEIJI SEIKA KAISHA LTD.**
**4-16 Kyobashi 2-chome**
**Chuo-ku Tokyo(JP)**

(72) Inventor: **Nishino, Kaoru, c/o Meiji Seika**
**Kaisha, Ltd.**
**Food Research and Development Lab., 5-3-1,**
**Chiyoda**
**Sakado-shi, Saitama(JP)**
Inventor: **Ishiwata, Yoichi, c/o Meiji Seika**
**Kaisha, Ltd.**
**Food Research and Development Lab., 5-3-1,**
**Chiyoda**
**Sakado-shi, Saitama(JP)**
Inventor: **Higurashi, Mikio, c/o Meiji Seika**
**Kaisha, Ltd.**
**Food Research and Development Lab., 5-3-1,**
**Chiyoda**
**Sakado-shi, Saitama(JP)**
Inventor: **Doi, Shuji, c/o Meiji Seika Kaisha,**
**Ltd.**
**Food Research and Development Lab., 5-3-1,**
**Chiyoda**
**Sakado-shi, Saitama(JP)**

(74) Representative: **WILHELMS, KILIAN &**
**PARTNER Patentanwälte**
**Eduard-Schmid-Strasse 2**
**W-8000 München 90(DE)**

(54) Process for producing potato product.

(57) A process for producing a potato product comprising putting cooked potatoes into a container, wherein a part of an opening is coated with a nonwoven fabric, which is impermeable to microorganisms and air-permeable, without adding any broth; sealing said container; and then sterilizing the same by heating.

EP 0 462 364 A2

## FIELD OF THE INVENTION

This invention relates to a process for producing a potato product. More particularly, it relates to a process for producing a potato product which can be preserved for a long period of time, taken as such upon use and reconstituted to an edible sate within an extremely short period of time even though it has been deteriorated upon prolonged storage.

## BACKGROUND OF THE INVENTION

Potato is one of foods which have been loved by people from of old and thus are essential in our eating habits. There have been a number of methods for cooking potato. For example, potato may be boiled, steamed, baked or fried and then eaten as such. Alternately, the potato thus cooked may be further used as a material for preparing, for example, soup, mashed potato or salad.

However, potato, which has been softened to an edible state by cooking, is liable to rapidly deteriorate due to proliferation of microorganisms. Thus it is difficult to preserve such potato for a long time at room temperture. Known methods for preserving raw potato containing a large amount of moisture or edible cooked potato for a long time at room temperture include a retort sterilization method comprising sealing raw or cooked potato in a container and heating the container to sterilize the potate inside of the container. This method has been widely applied to the preservation of meats, fishes and vegetables.

When this retort sterilization is applied to potato having a low heat conductivity, it is required to perform the sterilization at a temperature of 100 °C or above for 60 minutes or longer. In this case, however, the excessive heating would sometimes cause a change in the color tone or texture, getting out of shape or deterioration in the taste of the potato. Therefore attempts have been made in order to shorten the heating period for sterilizing potato. For example, there have been proposed to employ a small can or a thin container such as a retort pouch as a package so as to facilitate the heat transfer to the center of the container, to incorporate broth together with potato in a container so as to promote the heat transfer and to shake the content of a container (i.e., potato) by rotating the container so as to improve the heating efficiency.

Regarding canned potato products, there has been developed a high vacuum canning method which comprises feeding a solid food together with an extremely small amount of broth in a can, reducing the pressure in the can to 60 to 110 Torr or below to thereby remove air having a heat insulating effect and thus forming saturated vapor having a high latent heat into the can upon the heat sterilization to thereby promote the increase in the temperature of the solid food.

The conventional heat sterilization method which comprises treating potato together with a large amount of broth is disadvantageous in that: water-soluble components contained in potate are eluted into the broth and render the broth turbid; that the potato gets out of shape because of the heating and water absorption during the sterilization step, which damages the commercial value of the product; and that the weight of the product is elevated by the broth.

When the high vacuum canning method is to be performed, a vacuum seamer for the exclusive use is required. Further, it is required to select a can material and a can shape capable of withstanding the impact externally given because the pressure in the can considerably reduced. Therefore it is impossible, as a matter of course, to use a large can or a molded can made of plastics.

In the production of a so-called "flexible pack product" contained in a pouch made of a flexible plastic sheet, an aluminum film or a composite material comprising them (for example, a retort pouch), it is required to externally apply pressure to the container so as to prevent the bursting of the container upon heat sterilization or the subsequent cooling step. Accordingly, it is necessary to employ a special equipment therefor.

Various methods have been provided to give a potato product which has been packed and then sterilized by heating as described above and can be preserved for distribution for long at room temperature. However, these methods have problems in practice, that a special equipment is required in order to prevent the deterioration of the quality of the product, that the treatment is complicated, and that containers available therefor are limited. Thus the development of a highly preservable packed potato product is seriously hindered by these problems.

## SUMMARY OF THE INVENTION

It is an object of the present invention to provide a process for producing a potato product which has a good taste, can be reconstituted within a short period of time and has a long shelf life, in which heat sterilization of potato containing no broth within a shortened period of time without using any special equipment.

The present invention provides a process for producing a potato product comprising putting potatoes, without adding any broth into a container in which a part of an opening is coated with a nonwoven fabric which is impermeable to microorganisms and is air-permeable; sealing said container; and then subjecting the same to heat sterilization.

DETAILED DESCRIPTION OF THE INVENTION

The nonwoven fabric used in the present invention which constitutes the container is made of an ultrafine filament material and has a number of pores which are permeable to air and vapor but impermeable to microorganisms. The pore size is preferably not more than 0.3 $\mu$m. A commercially available nonwoven fabric may be used thereof.

Examples of the nonwoven fabrics include those made of polyethylene, polypropylene or polyester which consists of filaments of approximately 1 to 2 $\mu$m in diameter. The fabrics can be produced by melt blow method which comprises allowing melted materials to pass through a thin nozzle, blowing hot air to the material at an outlet of the nozzle to give filaments and then making them sheet-like fabrics. Alternatively, the fabrics may be produced by flush spinning method which comprises dissloving materials in a special solvent, allowing the resulting suspension to pass thorough a nozzle to give filaments and making them fabrics in sheets. A specific example of the fabrics is "Microweb SBO 50P", which is tradename of a product manufactured by Asahi Chemical Industry Co., Ltd.

The container to be used in the present invention is not particularly restricted. For example, a so-called "pouch" made of a flexible material or a container consisting of a concave main body and a lid for covering an opening located at the top of said main body may be used. Examples of the material of a pouch include single-layer or laminated plastic sheets acceptable under the Food Sanitation Act (for example, nylon, polypropylene, polycarbonate), aluminum film, composite materials made of the above-mentioned plastic sheets and aluminum film and paper sheets treated with resins. Furthermore, the part of the material to be formulated into the inside of the container may be coated with Teflon. In the case of a container consisting of a main body and a lid, the material of the main body may be selected from among tin-plate, glass and ceramics in addition to the above-mentioned ones. The lid may be preferably made of a plastic sheet or resin-treated paper, as described above, which can be adhered to the main body by heat sealing, in view of simplicity of operation for sealing procedure.

When the container to be used in the present invention is in the form of a pouch, an opening located at the top of the container is coated with the above-mentioned nonwoven fabric. As the container consists of a main body and a lid, an opening located in the lid, is preferably coated with the above-mentioned nonwoven fabric for preventing the content (i.e., potatoes) from contamination upon the heat sterilization. The opening may be coated with the nonwoven fabric by an appropriate means such as heat sealing.

The specific surface area of the opening of the container is preferably not less than 1% based on the surface area of the container in view of effeciency of heat exchange.

The moisture content of the potatoes to be introduced into the container is not particularly restricted. Thus either boiled potatoes containing approximately 80 % by weight of moisture or fried or air-dried ones, the moisture of which has been partly vaporized, may be used. Namely, the state of the potatoes may be selected by preference, so long as they have been cooked by heating.

The thus cooked potato is placed in the container so as not to contact the potato with the nonwoven fabric covering the opening of the container and subjected to heat sterilization. The container is located into a retort and the retort is closed. The temperature inside the retort raised to a predetermined level by blowing steam having vapor pressure of 3 to 7 kg/cm$^3$ through the retort. The temperture is controled to maintain a constant level for an appropriate time. The sterilization condition including temperature, time and the like varies depending on the culinary art of potatoes.

When vapor is emitted from the potatoes contained in the container during the above-mentioned heat sterilization step, vapor flow outside the container through the air-permeable nonwoven fabric. Therefore, the pressure within the container is not excessively elevated and thus the containder is neither deformed by expansion nor burst. In the case of vapor sterilization with the use of, for example, a retort, since the air within the container flows outside through the nonwoven fabric at the early stage of the heating and thus is replaced with saturated vapor, the use of the container according to the present invention can provide an elevated heating efficiency, a shortened sterilization time, an improved taste characteristic to potato free from stuffy odor which is generally given out at sealing and sterilization procedures as described in Test Example 1 below. Thus the product obtained by the method of the present invention is superior to conventional products contained in pouches or cans.

Air can go in and out the container containing the heat-sterilized potatoes through the nonwoven fabric. However the nonwoven fabric is impermeable to microorganisms and thus microorganisms present outside of the container cannot enter therein. Thus the potatoes can be preserved for a long period of time without being deteriorated by microorganisms.

After the completion of the heat sterilization, the nonwoven fabric may be coated with an airproof material, for example, an airproof plastic sheet so as to prevent the air from flowing into the container. The coating with the airproof sheet may be performed after reducing the pressure within the container or after replacing the air within the container with an inert gas such as nitrogen gas. Furthermore, the whole container may be wrapped with the above-mentioned airproof sheet, for so-called double-packing while introducing a deoxidizer thereto. In the case of a retort-pouch type container, the container may be subjected to heat sealing again at the part lower than the one coated with the nonwoven fabric to thereby completely seal the container.

According to the present invention, potatoes, which are either raw or have been heat-cooked, contained in the above-mentioned container may be sterilized by heating without adding any broth nor using any special instruments. After the completion of the heat sterilization, the potato product can be preserved at room temperature for a relatively long time without being deteriorated.

According to the present invention, furthermore, it is not required to add a broth and thus the characteristic taste of potato is not deteriorated. Furthermore, the heat sterilization atmosphere can be connected to the inside of the container via the nonwoven fabric, which shortens the treatment time. This is highly advantageous since the deterioration in the taste and texture can be relieved and the time required for the water absorption and expansion can be shortened thereby.

It has been regarded as difficult to produce a sterile potato product of semi-dry type because potato would be frequently contaminated with microorganisms during the drying process. However this technical problem can be solved by the present invention which makes it possible to sterilize potato by heating followed by drying while preventing the contamination with external microorganisms.

To further illustrate the present invention, the following Test Example and Examples are given, but are not construed to limit the present invention thereto.

Test Example 1

A window-type opening (20 cm²) was formed by cutting the upper part of one face of a commercially available retort pouch (manufactured by Toyo Seikan Kaisha, Ltd., polyester/nylon/polypropylene, 100 x 180 mm, transaprent and standing type). The opening was coated with a piece of nonwoven fabric (manufactured by Asahi Chemical Industry Co., Ltd., "Microweb SBO 50P: made of polypropylene filaments of 1 to 2 μm in diameter), which was air-permeable but impermeable to microorganisms, by heat sealing.

Potato pieces [20 mm (long) x 20 mm (broad) x 50 mm length)], which had been boiled in water at 93 °C for 10 minutes, were puts into the container thus obtained from the upper opening there of. Then the above-mentioned upper opening of the container was sealed by heat sealing.

As control lots, the same potato pieces as those described above were put into the same type retort pouch as the one described above except that no window-type opening was formed and nonwoven fabric was not formed and into a can (size No. 5) followed by sealing each in a conventional manner.

Each container was then located in a retort and treated at a temperature in the retort of 121 °C. The heat-treatment was continued until Clostridium botulinum was sterilized and the time required therefor was determined to serve as the heat sterilization time. The results are shown in Table 1.

4

Table 1

| Container | Heat sterilization time (min.) | Taste after retorting |
|---|---|---|
| Invention container | 13 | O |
| Control: common pouch | 25 | X |
| can | 40 | X |

Note: The taste after retorting was evaluated by 20 healthy female adult (20 to 30-year-old) panelists who were engaged in research and development of potato products. Products were evaluated for color, flavor, tactility to tongue and the like. The product showing the value for a commodity is referred to as O and a product showing inferiority in at least one of the above-described test items is regarded as valueless and referred to as X.

As Table 1 shows, the container according to the present invention showed an excellent heat transfer and could be sterilized within a shortened period of time. Furthermore, it suffered from no stuffy odor after the completion of the heat sterilization and showed an excellent texture and a good taste of the potatoes.

Example 1

Raw potatoes were washed with water, peeled and cut into pieces [20 mm (long) x 20 mm (broad) x 80 mm (length)]. After immersing potatos in water for approximately 10 minutes, the potato pieces were drained and fried in oil at 200 °C for 30 seconds to thereby give fried potato.

Then three pieces of the fried potato were introduced into the same retort pouch as the one described in Test Example 1 to which a nonwoven fabric was adhered. Then the opening at the upper part of the container was closed with heat sealing. The container was located in a retort and treated at a retort temperature of 121 °C for 16 minutes. Thus a heat sterilized potato product having a soft and full texture and a good taste was obtained. When the container was heat sealed again at a part below the part coated with the nonwoven fabric and stored in a thermostat at 37 °C for 1 month, no abnormality was observed.

Example 2

Raw potatoes were washed with water, peeled and cut into pieces [15 mm (long) x 10 mm (broad) x 50 mm (length)]. After immersing these potatos in water for approximately 10 minutes, the potato pieces were drained and fried in corn salad oil in a frying pan for approximately 5 minutes until the surface of the potato pieces became light brown.

Next, three pieces of the fried potato were put in the same retort pouch as the one described in Test Example 1 to which a nonwoven fabric was adhered by heat sealing. Then the opening at the upper part of the container was sealed with heat sealing. The container was located into a retort and treated at a retort temperature of 118 °C for 25 minutes. Thus a heat sterilized potato product having an excellent taste and no stuffy odor was obtained. When the container was sealed again in the same manner as the one described in Example 1 and stored at room temperature, no abnormality was observed after 3 months.

Example 3

A Lamicon Cup (tradename of a product manufactured by Toyo Seikan Kabushiki Kaisha; a polyvinylidene chloride/polypropylene laminate, external diameter of opening: 80 mm, internal diameter of opening: 67.4 mm, total height: 69 mm) was prepared. A part of a poly- propylene film (thickness: 60 $\mu$m, 110 x 100 mm) was cut so as to form an opening (2 cm). Then said opening was coated with a nonwoven fabric piece (15 x 30 mm) by heat sealing in the same manner as the one described in Test Example 1 to thereby give a lid for the above-mentioned cup. Thus a sheet capable of being heat-sealed was formed at the opening of the cup.

On the other hand, raw potatoes were washed with water, peeled and cut into pieces [15 mm (long) x 25 mm (broad) x 50 mm (length)]. After immersing in water for approximately 10 minutes, the potato pieces were drained and steamed at 95 °C for 10 minutes. Next, three pieces of the cooked potato were put into the above-mentioned cup. Then the opening of the cup containing the cooked potato pieces was sealed with the above-mentioned sheet for the lid by heat sealing with the use of a heat sealer (manufactured by Sunny Package K.K., Type TN204) at 180 °C for 2 seconds. Then the container was located into a retort and treated at a retort temperature of 118 °C for 25 minutes. Thus a heat sterilized potato product having a soft and full texture was obtained. Then, the potato product contained in the Lamicon Cup was introduced into a plastic package [15 cm (width) x 20 cm (length); three layer laminate consisting of polypropylene coated with polyvinylidene chloride (20 $\mu$m in thickness)/polyester (15 $\mu$m in thickness)/polypropylene (25 $\mu$m in thickness)] and the opening of the plastic bag was sealed. After storing at room temperature for 1 month, the potato product could be taken as such.

While the invention has been described in detail and with reference to specific examples thereof, it will be apparent to one skilled in the art that various changes and modifications can be made therein without departing from the spirit and scope thereof.

**Claims**

1. A process for producing a potato product comprising putting cooked potatoes into a container in which a part of an opening is coated with a nonwoven fabric, which is impermeable to microorganisms and air-permeable, without adding any broth; sealing said container; and then subjecting the same to heat sterilization.

2. A process for producing a potato product as claimed in Claim 1, wherein said container is in the form of a pouch made of a flexible material.

3. A process for producing a potato product as claimed in Claim 1, wherein said container consists of a concave main body and a lid for covering an opening located at the upper part of said main body, an opening is formed at the upper part of said lid and said opening is coated with a nonwoven fabric.

4. A process for producing a potato product as claimed in Claim 1, wherein said nonwoven fabric is made of polyethylene, polypropylene or polyester filament having a diameter of from 1 to 2 $\mu$m.

5. A process for producing a potato product as claimed in Claim 2, wherein said flexible material is selected from the group consisting of single-layer or laminated plastic sheets, aluminum film, composite materials of the plastic sheets and the alminum film and resin-coated sheets.

6. A process for producing a potato product as claimed in Claim 3, wherein said main body is made of single-layer or laminated plastic sheets, alminum film, composite materials of the plastic sheets and the alminum film, resin-treated sheets, tin-plate, glass and ceramics.

7. A process for producing a potato product as claimed in Claim 3, wherein said lid is made of plastic

6

sheets or resin-coated sheets.